# EUROPEAN PATENT APPLICATION

(11) **EP 4 644 796 A1**
(43) Date of publication of application: **05.11.2025**
(21) Application number: 25173118.8
(22) Date of filing: 29.04.2025
(51) Int. Cl.: F24F 3/147, F24F 11/84

(54) **AIR HANDLING SYSTEM**

(30) Priority: 02.05.2024 GB 202406165
(71) Applicant: Merit Group Services Limited, Cramlington, Northumberland NE23 7RY (GB)
(72) Inventor: WELLS, Anthony, Newcastle upon Tyne, NE23 7RY (GB)
(74) Representative: Definition IP Limited

(57) **Abstract**

An air handling system for circulating conditioned air through an environment, said system comprising an air intake unit and an air extractor. The air intake unit comprises: a first heating stage; a condensing stage configured to output a humidity-controlled airstream at no greater than a first predetermined temperature, said first predetermined temperature selected such that when the humidity-controlled airstream is further heated to a second predetermined temperature producing a heated and humidity-controlled airstream, the heated and humidity-controlled airstream has a predetermined maximum humidity; a second heating stage configured to heat the heated and humidity-controlled airstream to the second predetermined temperature, and an output assembly configured to output the heated and humidity-controlled airstream at the second predetermined temperature to the environment. The system further comprises: a heat recovery apparatus configured to extract waste heat from the environment, an energy transfer means, and a control system.

## Description

### Technical Field

The present invention relates to air handling systems for circulating conditioned air through an environment.

### Background

Air handling units (AHUs) are fundamental components in modern climate control systems, primarily designed to regulate and circulate air as part of a heating, ventilation, and air-conditioning (HVAC) system. Central to their operation is the ability to condition air to meet desired environmental parameters within enclosed spaces. Typically, an AHU comprises a fan unit, a cooling condenser, and a heating element.

The fan unit is responsible for drawing external air into the system, which is then subjected to conditioning processes to achieve the necessary temperature and humidity levels. The cooling condenser plays a pivotal role in lowering the air temperature and reducing humidity, especially when the intake air exceeds desired indoor conditions. Conversely, the heating element is engaged when the intake air temperature is below the set threshold for indoor comfort.

Critical to the efficiency of an AHU is the control and interplay between these components, ensuring that the output air consistently meets the pre-set temperature and humidity requirements. The operational intricacies of these units, particularly in how they balance the twin demands of temperature and humidity control while optimising energy consumption, form the basis of continuous innovation in this field.

### Summary of the Invention

In accordance with a first aspect of the invention, there is provided an air handling system for circulating conditioned air through an environment, said system comprising an air intake unit for inputting conditioned air into the environment and an air extractor for extracting air from the environment. The air intake unit comprises: a first heating stage configured to receive an input airstream; a condensing stage configured to output a humidity-controlled airstream at no greater than a first predetermined temperature, said first predetermined temperature selected such that when the humidity-controlled airstream is further heated to a second predetermined temperature producing a heated and humidity-controlled airstream, the heated and humidity-controlled airstream has a predetermined maximum humidity; a second heating stage configured to heat the heated and humidity-controlled airstream to the second predetermined temperature, and an output assembly configured to output the heated and humidity-controlled airstream at the second predetermined temperature to the environment. The system further comprises: a heat recovery apparatus configured to extract waste heat from the environment, an energy transfer means, and a control system. The control system is configured to control the energy transfer means to transfer heat energy from the heat recovery apparatus to the first heating stage and the second heating stage. When the input airstream is below the first predetermined temperature, the control system is configured to control the energy transfer means to selectively direct heat energy to the first heating stage of the air intake unit to provide heat energy to contribute to heating the input airstream to a maximum of the first predetermined temperature and to the second heating stage of the air intake unit to provide heat energy to contribute to heating the humidity-controlled airstream to the second predetermined temperature.

Optionally, the air extractor comprises an air extraction unit for extracting air from the environment, wherein the heat recovery apparatus is located within the air extraction unit.

Optionally, the first heating stage comprises a first heat exchanger connected to the heat recovery apparatus, and the second heating stage comprises a second heat exchanger connected to the heat recovery apparatus, such that heat energy can be exchanged from the heat recovery apparatus to the first heating stage and the second heating stage.

Optionally, the energy transfer means is a heat exchange circuit, and the first heat exchanger is fluidly connected by the heat exchange circuit to the heat recovery apparatus, and the second heat exchanger is fluidly connected to the heat recovery apparatus by the heat exchange circuit, such that heat energy can be exchanged from the heat recovery apparatus to the first heating stage and the second heating stage by a heat exchange fluid of the heat exchange circuit.

Optionally, the first heating stage further comprises a first auxiliary heating means which is configured to provide supplementary heat energy if insufficient heat energy is provided to the first heat exchanger from the heat recovery apparatus to reach the first predetermined temperature.

Optionally, the second heating stage further comprises a second auxiliary heating means which is configured to provide supplementary heat energy if insufficient heat energy is provided to the second heat exchanger from the heat recovery apparatus to reach the second predetermined temperature.

Optionally, the energy transfer means comprises fluid flow regulation means configured to regulate a flow of heat exchange fluid directed to the first heat exchanger and regulate the flow of heat exchange fluid directed to the second heat exchanger, and the system further comprises a controller configured to control the fluid flow regulation means to direct a first flow of heat exchange fluid to the first heat exchanger of the first heating stage to heat the input airstream to the first predetermined temperature and direct a second flow of heat exchange fluid to the second heat exchanger of the second heating stage to heat the humidity-controlled airstream to the second predetermined temperature.

Optionally, a fan unit configured to drive the input airstream through the air handling system is located relative to the first heating stage such that in use, heat energy dissipated by the fan unit contributes to heating the input airstream to the first predetermined temperature.

In accordance with a second aspect of the invention, there is provided a method of controlling an air handling system according to the first aspect. The method comprises, when the input airstream is below the first predetermined temperature: controlling the energy transfer means to selectively direct heat energy to the first heating stage of the air intake unit to provide heat energy to contribute to heating the input airstream to a maximum of the first predetermined temperature and to the second heating stage of the air intake unit to provide heat energy to contribute to heating the humidity-controlled airstream to the second predetermined temperature.

In accordance with a third aspect of the invention, there is provided an air intake unit for use in a system according to the first aspect. The air intake unit comprises: a first heating stage configured to receive an input airstream; a condensing stage configured to output a humidity-controlled airstream at no greater than a first predetermined temperature, said first predetermined temperature selected such that when the humidity-controlled airstream is further heated to a second predetermined temperature producing a heated and humidity-controlled airstream, the heated and humidity-controlled airstream has a predetermined maximum humidity; a second heating stage configured to heat the heated and humidity-controlled airstream to the second predetermined temperature, and an output assembly configured to output the heated and humidity-controlled airstream at the second predetermined temperature to the environment. The first heating stage and second heating stage are configured to receive heat energy via an energy transfer means controlled by a control system from a heat recovery apparatus configured to extract waste heat from an environment, such that: when the input airstream is below the first predetermined temperature, the control system can selectively direct heat energy to the first heating stage of the air intake unit to provide heat energy to contribute to heating the input airstream to a maximum of the first predetermined temperature and to the second heating stage of the air intake unit to provide heat energy to contribute to heating the humidity-controlled airstream to the second predetermined temperature.

In accordance with certain embodiments of the invention, an air handling system is provided. From an intake airstream, typically drawn from the external environment, which is of varying temperature and varying relative humidity, the system is configured to produce a conditioned output airstream at a constant target output temperature and at a relative humidity that does not exceed a target maximum relative humidity. Advantageously, the system is configured so that a maximal amount of recovered heat energy can be used to provide heat energy for heating operations necessary to produce the conditioned output airstream.

In keeping with conventional arrangements, the system comprises a preliminary condensing stage to control the humidity of the intake airstream, and a secondary heating stage to heat the humidity-controlled airstream to a final output temperature.

The condensing stage and re-heating are positioned relative to each other in an otherwise conventional fashion in that the input airstream first passes through the preliminary condensing stage which ensures that irrespective of the temperature of the intake airstream, the airstream entering secondary heating stage does not exceed a predetermined maximum pre-heat temperature. In accordance with well-known principles, based on the relationship between the temperature of air and its capacity to retain moisture, this predetermined maximum pre-heat temperature is dictated by the target temperature and target relative absolute humidity of the conditioned output airstream. Specifically, by controlling the maximum pre-heat temperature, the airstream, when subsequently heated to the final desired temperature, will attain a relative humidity level that does not surpass the predetermined target relative humidity.

However, in contrast to conventional arrangements, the system is provided with two heating stages both of which heat the airstream using recovered heat energy, typically recovered from an air extraction unit forming part of the system. The first of these heating stages is located before the condensing stage and the second is located after the condensing stage.

A control unit controls how heat energy is directed to these heating stages such that, depending on the temperature of the intake airstream and the availability of recovered heat energy, recovered heat energy can be selectively used to contribute to either or both of pre-heating the input airstream to the predetermined maximum pre-heat temperature, and then after passing through the condensing stage to produce a humidity controlled airstream, contribute to heating the humidity controlled airstream to the target output temperature.

In this way, irrespective of the temperature of the intake airstream, a maximal amount of recovered heat energy, if available, can be used to produce the conditioned output airstream. Specifically, in settings where the intake air temperature is below the maximum pre-heat temperature, recovered heat energy can be used both to contribute (either partially or totally depending on the availability of recovered heat energy) to heating the intake airstream to the maximum pre-heat temperature, and also to contribute (again, either partially or totally depending on the availability of recovered heat energy) to heating the humidity-controlled airstream to the final output temperature.

On the other hand, in settings where the intake air temperature is above the maximum pre-heat temperature making heating of the airstream before the condensing stage unnecessary, once the intake airstream has been cooled to the maximum pre-heat temperature, all the available recovered heat energy can be used to re-heat the humidity-controlled airstream to the final output temperature.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 provides a simplified schematic diagram which shows the fundamental principles of the operation of a conventional air handling unit used to produce and output conditioned air at a set temperature and set maximum relative humidity;
Figure 2 provides a simplified schematic diagram showing an air handling unit in which a heating coil receives heat energy from a heat recovery unit, and
Figure 3 provides a simplified schematic diagram depicting an air handling system which employs a split heat recovery system to more efficiently use recovered heat to provide heating energy for use in an air handling unit in accordance with certain embodiments of the invention.

### Detailed Description

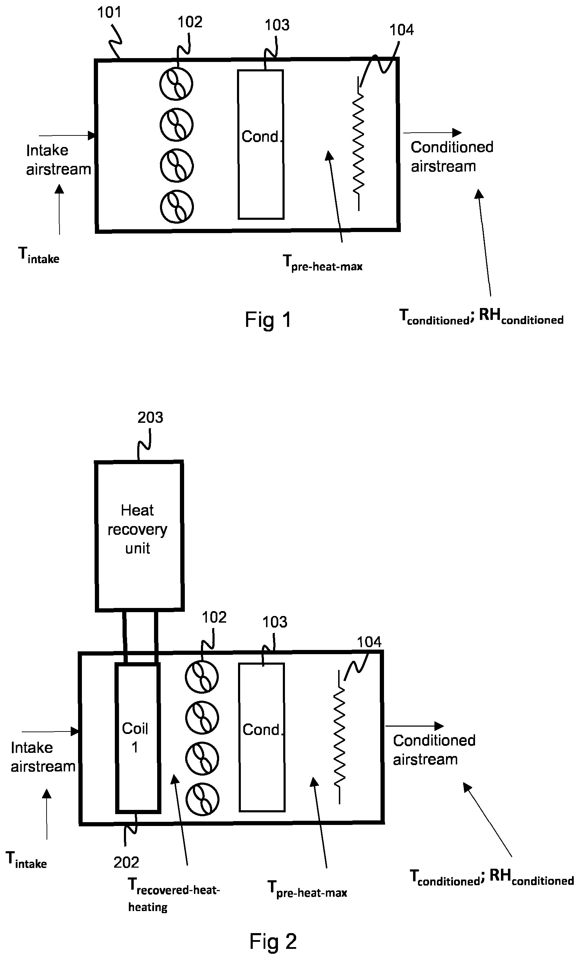

Figure 1 provides a simplified schematic diagram which shows the fundamental principles of the operation of a conventional air handling unit 101 used to produce and output conditioned air at a set temperature and set maximum relative humidity.

The air handling unit 101 comprises a fan unit 102, a cooling condenser unit 103 and a heating element 104.

In use, operation of the fan unit 102 draws an intake airstream into the air handling unit 101 from an external environment (the temperature and humidity of which will inherently vary). The cooling condenser unit 103 and heating element 104 then "condition" this airstream to produce an airstream at a target temperature T_{conditioned} and at a target maximum relative humidity RH_{conditioned}. This conditioned airstream is then normally output into an enclosed environment.

During operation of the air handling unit 101, when the temperature of the intake airstream, Tᵢₙₜₐₖₑ, is lower than the target temperature, T_{conditioned}, the heating element 104 is controlled to heat the airstream to the target temperature T_{conditioned}. On the other hand, when the temperature of the intake airstream, Tᵢₙₜₐₖₑ, is higher than the target temperature, T_{conditioned}, the cooling condenser unit 103 is controlled to cool the airstream.

However, in certain scenarios, although the capacity of the airstream to retain moisture decreases as it is cooled, when the external environment has a high ambient humidity, simply cooling the intake airstream from the temperature of the intake airstream, Tᵢₙₜₐₖₑ, to the target temperature, T_{conditioned}, results in a level of humidity that, whilst reduced, still exceeds the target maximum relative humidity RH_{conditioned}. Consequently, the airstream must be cooled further below the target temperature T_{conditioned}, to remove moisture to meet the target maximum relative humidity RH_{conditioned} and then reheated to the target temperature T_{conditioned}**.**

Consequently, the air handling unit 101 and in particular the cooling condenser unit 103 is operated to ensure that the airstream within the air handling unit 101 is always cooled to at least a maximum pre-heating temperature, Tₚᵣₑ₋ₕₑₐₜ₋ₘₐₓ. This is the maximum temperature necessary so that the airstream is dehumidified sufficiently so that when it is reheated to the target temperature T_{conditioned}, the target maximum relative humidity RH_{conditioned} is not exceeded.

For example, if the required temperature of the conditioned airstream, T_{conditioned}, is 19°C, and the maximum relative humidity is 75%, the maximum pre-heating temperature, Tₚᵣₑ₋ₕₑₐₜ₋ₘₐₓ, of the air directly prior to being reheated to the required temperature of the conditioned airstream, T_{conditioned}, is 12°C.

Cooling undertaken by the cooling condenser unit 103 and heating undertaken by the heating element 104 consume energy and it is generally desirable to reduce this energy consumption as far as possible.

A known way to achieve this is to "recover" heat energy from an airstream being exhausted from the enclosed space, typically by locating a suitable heat exchanger in a return unit which accompanies the air handling unit 101, and use this recovered heat energy to contribute to the heating undertaken in the air handling unit 101.

An example illustrating this concept is shown in Figure 2.

An air handling unit 201 shown in Figure 2 corresponds to the air handling unit 101 in Figure 1, except that a heating coil 202, which receives heat energy from a heat recovery unit 203, is located relative to the air intake of the 201 to heat the intake airstream. Convention dictates that such heating coils are located on the intake (i.e. pre-condensing) side of the air handling unit 101.

As explained above, in typical arrangements, the cooling condenser unit 103 is controlled so that the temperature of the air before being reheated by the heating element 104 never exceeds the maximum pre-heating temperature, Tₚᵣₑ₋ₕₑₐₜ₋ₘₐₓ.

Consequently, when the temperature Tᵢₙₜₐₖₑ of the intake airstream is below the target temperature T_{conditioned} of the conditioned airstream, the maximum amount of heat energy the heating coil 202 can usefully impart is an amount of heat energy that heats the intake airstream to the maximum pre-heating temperature, Tₚᵣₑ₋ₕₑₐₜ₋ₘₐₓ. Heat energy which gives rise to any heating beyond this is counter-productive, because further energy will then need to be expended by the cooling condenser unit 103 to cool the airstream back to the maximum pre-heating temperature, Tₚᵣₑ₋ₕₑₐₜ₋ₘₐₓ. (Note, for simplicity, this analysis ignores any heating from operation of the fan unit 102.)

As a result, in modes of operation where the target temperature T_{conditioned} of the conditioned airstream is greater than the maximum pre-heating temperature, Tₚᵣₑ₋ₕₑₐₜ₋ₘₐₓ (which is typically the most common mode of operation), additional heat energy will always be required to heat the heating element 104, even if there is further heat energy available from the heat recovery unit 203.

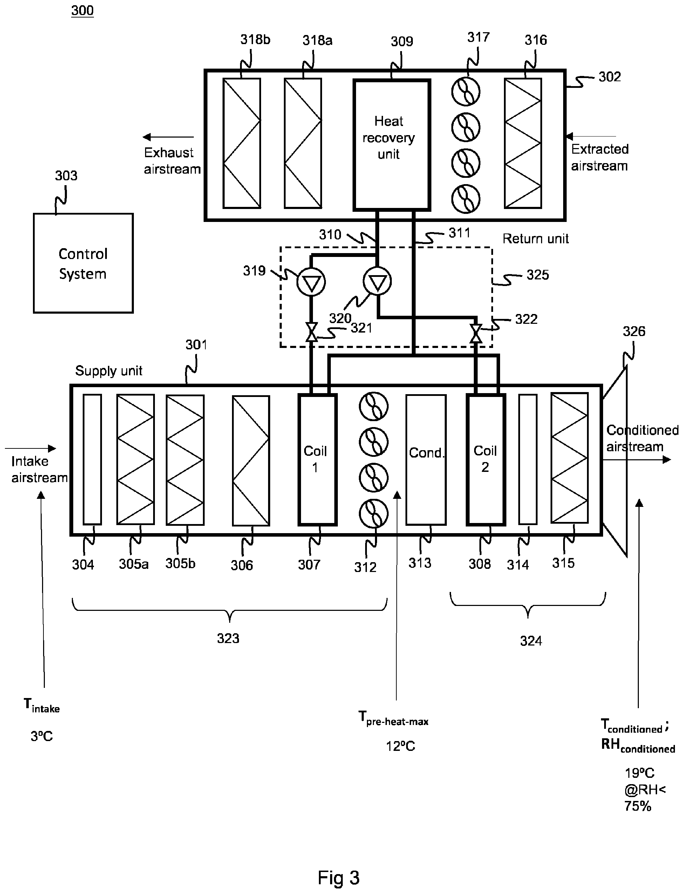

Figure 3 provides a simplified schematic diagram depicting an air handling system 300 which employs a split heat recovery system to more efficiently use recovered heat to provide heating energy for use in an air handling unit in accordance with certain embodiments of the invention.

The system 300 comprises a modified air intake unit 301 and an air extraction unit 302 for circulating conditioned air through an enclosed environment, such as the interior of part of, or all of, a structure such as a building. The modified air intake unit 301 is configured to produce a conditioned airstream for input to the enclosed environment, and an air extraction unit 302 is configured to extract and exhausting air from the enclosed environment.

The modified air intake unit 301 and air extraction unit 302 can be deployed in an otherwise conventional fashion. For instance, they can be installed as part of an HVAC system within an enclosed environment such as a building, and located conventionally such as on rooftops, in mechanical rooms, or basements and so on. The modified air intake unit 301 and air extraction unit 302 can be connected to the enclosed environment and exterior environment using conventional means such as via suitably directed ductwork systems.

Operation of the system 300 is controlled by a control system 303. The control system 303 can be implemented in any suitable way. For example, it may be a simple programmable logic controller (PLC), or a more complex digital system like a microprocessor-based control unit. In some implementations, the control system can use a Proportional-Integral-Derivative (PID) approach to precisely manage system parameters based on real-time feedback. Alternatively, it could be implemented using a distributed control system (DCS) for larger scale operations, or an integrated building management system (BMS) that includes control of other components and systems.

As will be understood, although not shown in Figure 3, the control system 303 is connected to the rest of the system via suitable sensor and control lines. Sensor lines link the control system 303 to various sensors placed throughout the system, such as temperature sensors, flow sensors, and humidity sensors. The control lines connect the control system to various operational components of the system which are described in more detail below.

The modified air intake unit 301 comprises a preliminary heating element 304, a first filter 305a and a second filter 305b and an intake noise-suppressing attenuator 306.

The preliminary heating element 304 can be provided by any suitable heating means. For example, it can include an electrical resistance heater, a hot water coil system using water heated by an external boiler, or a steam coil system where steam is circulated through coils to transfer heat to the incoming air. Alternatively, a heat pump, configured for heating purposes, could be employed.

The first filter 305a, which in a typical embodiment could be a G4 type filter, and the second filter 305b, which in a typical embodiment could be a F9 type filter, sequentially filter the incoming airstream. The first filter 305a, if implemented as a G4 filter, captures larger particles such as dust, pollen, and hair, acting as a pre-filter. The second filter 305b, as an F9 filter, traps finer particulates, including fine dust. This configuration ensures effective air purification and helps extend the lifespan of the second filter 305b by reducing its exposure to larger particles.

The intake noise-suppressing attenuator 306 reduces the noise generated by the airflow and the mechanical components of the modified air intake unit 301. The intake noise-suppressing attenuator 306 typically contains sound-absorbing materials like mineral wool or foam. These materials absorb sound waves, thereby diminishing the noise level emitted from the AHU. The intake noise-suppressing attenuator 306 is configured to reduce noise without significantly impacting the airflow efficiency of the system.

The modified air intake unit 301 further comprises a first heat exchanger provided by a pre-condensing heating coil 307 and a second heat exchanger provided by a post-condensing heating coil 308.

The pre-condensing heating coil 307 and post-condensing heating coil 308 are connected to heat recovery apparatus provided by a heat recovery unit 309 located within the air extraction unit 302 via a heat exchange circuit 325 which comprises an output line 310 and a return line 311.

The heat recovery unit 309 can be implemented using any suitable heat exchange technique, for example using one or more of coiled pipes filled with the heat exchange fluid, a rotary heat exchanger where a rotating element absorbs heat from the exhaust air and transfers it to the heat transfer medium in the circuit or a plate heat exchanger, where heat is transferred through adjacent plates from the outgoing airstream to the heat transfer fluid.

Heat exchange fluid (which can be for example water, a suitable glycol solution or refrigerant) is heated in the heat recovery unit 309 which is directed via the output line 310 to the pre-condensing heating coil 307 and post-condensing heating coil 308 where heat energy is dissipated to heat the airstream in the modified air intake unit 301, and the heat exchange fluid then returns to the heat recovery unit 309 via the return line 311.

The pre-condensing heating coil 307 and post-condensing heating coil 308 are positioned either side of a fan unit 312 and a condenser unit 313. The fan unit 312 is configured to draw the intake airstream into the modified air intake unit 301 and drive the conditioned airstream out of the modified air intake unit 301.

As explained in more detail below, the condenser unit 313 of the modified air intake unit 301 is configured, when necessary, to cool the intake airstream. The condenser unit 313 can be provided by any suitable conventional condenser unit, for example, an air-cooled condenser, a water-cooled condenser, or an evaporative condenser.

Adjacent the post-condensing heating coil 308 on the output side is a post-condensing heating element 314 which is adjacent a further filter 315. Like the preliminary heating element 304, the post-condensing heating element 314 can be provided by any suitable heating means, for example an independently powered electrical resistance heater, a hot water coil system, a steam coil system, or a heat pump configured for heating.

**In certain** settings, such as cleanrooms, pharmaceutical manufacturing, or hospitals, the further filter 315 might be a 'H14 PTFE' filter. Such filters trap even very small particles and are used in in environments where air purity is very important.

The modified air intake unit 301 further comprises an output assembly 326, for example a connection to a ducting arrangement, via which the conditioned airstream is directed into the enclosed environment.

The air extraction unit 302 comprises an exhaust filter 316 and a fan unit 317 for drawing the extracted airstream into the air extraction unit 302. Positioned on the output side of the air extraction unit 302 there is a first exhaust attenuator 318a and a second exhaust attenuator 318b.

The fan unit 312 of the modified air intake unit 301 and the fan unit 317 of the air extraction unit 302 can be provided by any suitable type of fan unit known for use in air handling systems, for example those comprising a single fan or array of fans. The fan or fans themselves can be provided by any suitable fan type for example axial fans or centrifugal fans.

Returning to the heat exchange circuit 325, the output line 310 splits at a junction and with one branch input to the pre-condensing heating coil 307 via a first pump 319 and first valve 321, and the other branch input to the post-condensing heating coil 308 via a second pump 320 and second valve 322. Together, the output line 310, return line 311, first pump 319 and second pump 320, first valve 321 and second valve 322 provide energy transfer means in the form the heat exchange circuit 325 controlled by the control system 303. Specifically, via suitable control lines, the control system 303 controls the operation of the first pump 319 and second pump 320 and the first valve 321 and second valve 322 to selectively control the flow rate of heat exchange fluid passing through the pre-condensing heating coil 307 and post-condensing heating coil 308 thereby selectively controlling the amount of heat energy transferred from the heat recovery unit 309 to the pre-condensing heating coil 307 and post-condensing heating coil 308 respectively. The first pump first pump 319, second pump 320, first valve 321, and second valve 322 together form a heat-exchange fluid flow regulation system.

The preliminary heating element 304 and pre-condensing heating coil 307 form a first heating stage 323, while the post-condensing heating coil 308 and the post-condensing heating element 314 form a second heating stage 324

In use, operation of the fan unit 312 and condenser unit 313 is undertaken otherwise conventionally: the fan unit 312 is operated to draw an intake airstream into the modified air intake unit 301 from an external environment, and the condenser unit 313 is operated to output a humidity-controlled airstream by ensuring that a first predetermined temperature, i.e. the maximum pre-heating temperature, Tₚᵣₑ₋ₕₑₐₜ₋ₘₐₓ is never exceeded.

As described above, the maximum pre-heating temperature, Tₚᵣₑ₋ₕₑₐₜ₋ₘₐₓ is selected so that when the humidity-controlled airstream is subsequently heated to a second predetermined temperature i.e. the target temperature T_{conditioned}, this airstream does attain a relative humidity that exceeds a predetermined maximum relative humidity, i.e. the target maximum relative humidity RH_{conditioned}.

Filtering and noise attenuation in the air extraction unit 302 is undertaken in an otherwise conventional fashion. The fan unit 317 draws an extracted airstream from the enclosed environment which initially passes through an exhaust filter 316. In some examples, the exhaust filter 316 can be an F9 type filter. In such cases, the F9 filter would be capable of trapping fine particulates from the airstream, such as dust and other small particles. This ensures that the air expelled through the filter is cleaner, with reduced particulate matter. Before being exhausted, the airstream finally passes through the first exhaust attenuator 318a and the second exhaust attenuator 318b. The purpose of the first exhaust attenuator 318a is to reduce the noise generated by the air extraction process at its initial stage, while the second exhaust attenuator 318b further diminishes any remaining noise before the airstream exits the air extraction unit 302.

However, before being exhausted, the extracted airstream is passed through the heat recovery unit 309 which recovers heat energy from the extracted airstream. The heat energy extracted by the heat recovery unit 309 is waste heat which would otherwise simply be heat in the exhaust airstream.

Returning to the modified air intake unit 301, in a first mode of operation where the target temperature of the conditioned airstream T_{conditioned} and the target maximum relative humidity RH_{conditioned} dictate a maximum pre-heating temperature, Tₚᵣₑ₋ₕₑₐₜ₋ₘₐₓ which is greater than the temperature of the intake airstream Tᵢₙₜₐₖₑ then the intake airstream will need to be heated.

However, as mentioned above, due to the conventional configuration and control of the condenser unit 313, any heating of the airstream before it passes through the condenser unit 313 that exceeds the maximum pre-heating temperature, Tₚᵣₑ₋ₕₑₐₜ₋ₘₐₓ, will be wasted as the condenser unit 313 is set to ensure that the humidity-controlled airstream which it produces, never exceeds maximum pre-heating temperature, Tₚᵣₑ₋ₕₑₐₜ₋ₘₐₓ before it is reheated by the second heating stage 324 to produce a heated and humidity-controlled airstream which is output as the conditioned airstream.

Accordingly, when the temperature of the intake airstream Tᵢₙₜₐₖₑ is lower than the target temperature T_{conditioned} of the conditioned airstream, the control system 303 is configured to control the heat exchange circuit 325, by suitable operation of the first pump 319, second pump 320, first valve 321 and second valve 322, so that heat energy recovered by the heat recovery unit 309 is directed to the pre-condensing heating coil 307. In particular, the control system 303 controls the heat exchange circuit 325 so that in combination with heat energy imparted by the fan unit 312, the intake airstream, when it exits the first heating stage 323 and reaches the condenser unit 313 is heated to as close to the maximum pre-heating temperature, Tₚᵣₑ₋ₕₑₐₜ₋ₘₐₓ, that the availability of recovered heating energy from the heat recovery unit 309 allows.

Because in this mode of operating the temperature of the intake airstream Tᵢₙₜₐₖₑ is lower than the maximum pre-heating temperature Tₚᵣₑ₋ₕₑₐₜ₋ₘₐₓ, the condenser unit 313 will be in an idle state as no cooling is necessary. If there is any surplus recovered heat energy, then the control system 303 is configured to control the heat exchange circuit 325 (again by suitable operation of the first pump 319, second pump 320, first valve 321 and second valve 322) to direct this heat energy to the post-condensing heating coil 308 to contribute to the second heating stage 324 heating the airstream towards the target temperature T_{conditioned} of the conditioned airstream before it is output.

In this way, recovered heat energy is efficiently used to heat the input airstream to as close to the maximum pre-heating temperature, Tₚᵣₑ₋ₕₑₐₜ₋ₘₐₓ as possible, but also contribute towards heating the airstream after the condensing stage to the target temperature T_{conditioned} of the conditioned airstream.

If there is insufficient recovered heat energy from the heat recovery unit 309 to heat the intake airstream to the maximum pre-heating temperature, Tₚᵣₑ₋ₕₑₐₜ₋ₘₐₓ, then supplementary heat energy can be provided by the preliminary heating element 304. Similarly, if there is insufficient recovered heat energy from the heat recovery unit 309 to impart to the post-condensing heating coil 308 to heat the airstream to the target temperature T_{conditioned} of the conditioned airstream in the second heating stage 324, then the necessary supplementary heat energy can be provided by the post-condensing heating element 314.

Temperatures associated with an illustrative example are shown in Figure 3.

As can be seen from Figure 3, in this illustrative example, the intake temperature Tᵢₙₜₐₖₑ is 3°C (e.g. the ambient temperature of air in the external environment from which the intake airstream is drawn), the additional dissipated heat energy imparted to the intake airstream as it passes through the fan unit 312 is 2°C and the target temperature T _{conditioned} is 19°C with a target maximum relative humidity RH_{conditioned} of 75%. As noted above, a target temperature T _{conditioned} of 19°C with a target maximum relative humidity RH_{conditioned} of 75% sets a maximum pre-heating temperature, Tₚᵣₑ₋ₕₑₐₜ₋ₘₐₓ of 12°C.

In such an example, the control system 303 controls the first heating stage 323 to heat the intake airstream from 3°C to 12 °C. As the fan unit 312 imparts a temperature increase of 2°C, the control system 303 controls the preliminary heating element 304 and the pre-condensing heating coil 307 to impart a 7°C increase in temperature to the intake airstream. The ambient temperature of the airstream of 3°C combined with the 2°C increase from the fan unit 312 and the 7°C increase in temperature from the preliminary heating element 304 and pre-condensing heating coil 307, heats the airstream to the maximum pre-heating temperature, Tₚᵣₑ₋ₕₑₐₜ₋ₘₐₓ of 12°C.

As will be understood, for optimal efficiency, the control system 303 will favour heating by the pre-condensing heating coil 307 rather than the separately powered preliminary heating element 304. Ideally, there will be sufficient heat energy from the heat recovery unit 309 to enable the pre-condensing heating coil 307 to contribute all the heat energy necessary to give rise to the 7°C increase in temperature to the intake airstream. However, any shortfall can be provided by the preliminary heating element 304.

In this example, the temperature of the airstream when it passes over the condenser unit 313 is at the maximum pre-heating temperature, Tₚᵣₑ₋ₕₑₐₜ₋ₘₐₓ of 12°C. The control system 303 controls the post-condensing heating coil 308 and post-condensing heating element 314 of the second heating stage 324 to impart a further temperature increase of 7°C so that the airstream reaches the target temperature T_{conditioned} of 19°C.

Again, as will be understood, for optimal efficiency, the control system 303 will favour heating by the post-condensing heating coil 308 rather than the separately powered post-condensing heating element 314. Ideally, there will be sufficient heat energy from the heat recovery unit 309 to enable the post-condensing heating coil 308 to contribute all the heat energy necessary to give rise to the final 7°C increase in temperature to heat the airstream to the target temperature T_{conditioned} of 19°C. However, any shortfall can be provided by the post-condensing heating element 314.

As will be understood, in this mode of operation (where the temperature of the intake airstream Tᵢₙₜₐₖₑ is lower than the maximum pre-heating temperature, Tₚᵣₑ₋ₕₑₐₜ₋ₘₐₓ and the target temperature of the conditioned airstream T_{conditioned} is greater than Tₚᵣₑ₋ₕₑₐₜ₋ₘₐₓ) when there is not sufficient recovered heat energy from the heat recovery unit 309 to provide all the necessary heat energy to both the first heating stage 323 and the second heating stage 324, the control system 303 can be configured to balance how the heat energy directed to the pre-condensing heating coil 307 and the post-condensing heating coil 308.

For example, in configurations where the most efficiency gains are to be made by directing heat energy to the pre-condensing heating coil 307, then the control system 303 can be configured to control the heat exchange circuit 325 to direct all available heat energy to the pre-condensing heating coil 307, and direct any surplus heat energy to the post-condensing heating coil 308. Or, vice versa, in configurations where the most efficiency gains are to be made by directing heat energy to the post-condensing heating coil 308, then the control system 303 can be configured to control the heat exchange circuit 325 to direct all available heat energy to the post-condensing heating coil 308, and direct any surplus heat energy to the pre-condensing heating coil 307.

In a second mode of operation where the temperature of the intake airstream Tᵢₙₜₐₖₑ in combination with any heat rise due to operation of the fan unit 312 is greater than the maximum pre-heating temperature Tₚᵣₑ₋ₕₑₐₜ₋ₘₐₓ and the target temperature of the conditioned airstream T_{conditioned} is greater than Tₚᵣₑ₋ₕₑₐₜ₋ₘₐₓ, then the control system 303 is configured to control the modified air intake unit 301 to cool the intake airstream. In such a mode of operation, the first heating stage 323 is inactive (and in particular, no heat recovered heat energy is directed to the pre-condensing heating coil 307) and the condenser unit 313 operates to cool the intake airstream to the maximum pre-heating temperature, Tₚᵣₑ₋ₕₑₐₜ₋ₘₐₓ.

The control system 303 then controls the heat exchange circuit 325 to direct all available recovered heat energy from the heat recovery unit 309 to the post-condensing heating coil 308 to heat the airstream to the target temperature of the conditioned airstream T_{conditioned}. The control system 303 is configured to control the post-condensing heating element 314 to provide heat energy to make up for any shortfall.

The system 300 described with reference to Figure 3 provides one example of a system employing a pre-condensing heating coil 307 and a post-condensing heating coil 308 in an handling unit 301, where the coils receive recovered heat energy. However as will be understood, many alternative configurations are possible. In particular, alternative embodiments can be arranged with different combinations of fans, filters, noise supressing attenuators, and other conventional elements normally included in air circulation systems.

Further, in the embodiment described above, the heat recovery apparatus is located in the air extraction unit 302. However, in alternative embodiments, the heat recovery apparatus can be located elsewhere within the enclosed environment, for example, adjacent to heat-generating equipment like servers or industrial machines, in ceiling or floor spaces where warm air accumulates, centrally within the space for uniform heat distribution, or integrated with other components of the HVAC system such as cooling coils or humidifiers.

Further, in the embodiment described above, heat energy is transferred from the heat recovery apparatus to the modified air intake unit 301 via the heat exchange circuit 325 connected to a first heat exchanger (in the form of the pre-condensing heating coil 307) in the first heating stage 323, and a second heat exchanger (in the form of the post-condensing heating coil 308). As described above, the heat exchange circuit 325 can be provided by otherwise conventional heat exchange means, for example suitable conduits bearing a suitable heat exchange fluid. It will be understood that alternative heat transfer mechanisms could be used, if the setting allowed, for example, conveying heat energy via steam.

Alternatively still, in other embodiments, heat energy recovered by the heat recovery apparatus could be converted into a different form of energy, for example electrical energy, and the energy transfer means provided by a corresponding suitable means to convey this energy to the first heating stage 323 and second heating stage 324, for example an electrical circuit. In such an embodiment, the electrical energy could be used to provide energy to heat electrical resistance heaters. This energy could be used to provide electrical energy to existing electrical heating elements, like the preliminary heating element 304 and the post-condensing heating element 314 described above.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. An air handling system for circulating conditioned air through an environment, said system comprising an air intake unit for inputting conditioned air into the environment and an air extractor for extracting air from the environment, wherein the air intake unit comprises:
a first heating stage configured to receive an input airstream;
a condensing stage configured to output a humidity-controlled airstream at no greater than a first predetermined temperature, said first predetermined temperature selected such that when the humidity-controlled airstream is further heated to a second predetermined temperature producing a heated and humidity-controlled airstream, the heated and humidity-controlled airstream has a predetermined maximum humidity;
a second heating stage configured to heat the heated and humidity-controlled airstream to the second predetermined temperature, and
an output assembly configured to output the heated and humidity-controlled airstream at the second predetermined temperature to the environment, wherein the system further comprises:
a heat recovery apparatus configured to extract waste heat from the environment;
an energy transfer means, and a control system, said control system is configured to control the energy transfer means to transfer heat energy from the heat recovery apparatus to the first heating stage and the second heating stage, wherein:
when the input airstream is below the first predetermined temperature, the control system is configured to control the energy transfer means to selectively direct heat energy to the first heating stage of the air intake unit to provide heat energy to contribute to heating the input airstream to a maximum of the first predetermined temperature and to the second heating stage of the air intake unit to provide heat energy to contribute to heating the humidity-controlled airstream to the second predetermined temperature.

2. An air handling system according to claim 1, wherein the air extractor comprises an air extraction unit for extracting air from the environment, wherein the heat recovery apparatus is located within the air extraction unit.

3. An air handling system according to claim 1 or 2, wherein
the first heating stage comprises a first heat exchanger connected to the heat recovery apparatus, and
the second heating stage comprises a second heat exchanger connected to the heat recovery apparatus, such that heat energy can be exchanged from the heat recovery apparatus to the first heating stage and the second heating stage.

4. An air handling system according to claim 3, wherein the energy transfer means is a heat exchange circuit, and
the first heat exchanger is fluidly connected by the heat exchange circuit to the heat recovery apparatus, and
the second heat exchanger is fluidly connected to the heat recovery apparatus by the heat exchange circuit, such that heat energy can be exchanged from the heat recovery apparatus to the first heating stage and the second heating stage by a heat exchange fluid of the heat exchange circuit.

5. An air handling system according to claim 3 or 4, wherein the first heating stage further comprises a first auxiliary heating means which is configured to provide supplementary heat energy if insufficient heat energy is provided to the first heat exchanger from the heat recovery apparatus to reach the first predetermined temperature.

6. An air handling system according to claim 5, wherein the second heating stage further comprises a second auxiliary heating means which is configured to provide supplementary heat energy if insufficient heat energy is provided to the second heat exchanger from the heat recovery apparatus to reach the second predetermined temperature.

7. An air handling system according to claim 4, 5 or 6, wherein the energy transfer means comprises fluid flow regulation means configured to regulate a flow of heat exchange fluid directed to the first heat exchanger and regulate the flow of heat exchange fluid directed to the second heat exchanger, and the system further comprises a controller configured to control the fluid flow regulation means to direct a first flow of heat exchange fluid to the first heat exchanger of the first heating stage to heat the input airstream to the first predetermined temperature and direct a second flow of heat exchange fluid to the second heat exchanger of the second heating stage to heat the humidity-controlled airstream to the second predetermined temperature.

8. An air handling system according to any previous claim, wherein a fan unit configured to drive the input airstream through the air handling system is located relative to the first heating stage such that in use, heat energy dissipated by the fan unit contributes to heating the input airstream to the first predetermined temperature.

9. A method of controlling an air handling system as claimed in any previous claim, wherein the method comprises, when the input airstream is below the first predetermined temperature:
controlling the energy transfer means to selectively direct heat energy to the first heating stage of the air intake unit to provide heat energy to contribute to heating the input airstream to a maximum of the first predetermined temperature and to the second heating stage of the air intake unit to provide heat energy to contribute to heating the humidity-controlled airstream to the second predetermined temperature.

10. An air intake unit for use in a system according to any of claims 1 to 8, comprising:
a first heating stage configured to receive an input airstream;
a condensing stage configured to output a humidity-controlled airstream at no greater than a first predetermined temperature, said first predetermined temperature selected such that when the humidity-controlled airstream is further heated to a second predetermined temperature producing a heated and humidity-controlled airstream, the heated and humidity-controlled airstream has a predetermined maximum humidity;
a second heating stage configured to heat the heated and humidity-controlled airstream to the second predetermined temperature, and
an output assembly configured to output the heated and humidity-controlled airstream at the second predetermined temperature to the environment, wherein the first heating stage and second heating stage are configured to receive heat energy via an energy transfer means controlled by a control system from a heat recovery apparatus configured to extract waste heat from an environment, such that:
when the input airstream is below the first predetermined temperature, the control system can selectively direct heat energy to the first heating stage of the air intake unit to provide heat energy to contribute to heating the input airstream to a maximum of the first predetermined temperature and to the second heating stage of the air intake unit to provide heat energy to contribute to heating the humidity-controlled airstream to the second predetermined temperature.
